Europäisches Patentamt

European Patent Office

Office européen des brevets

(19)

(11) Veröffentlichungsnummer: **0 215 827**
**B1**

(12) **EUROPÄISCHE PATENTSCHRIFT**

(45) Veröffentlichungstag der Patentschrift:
**11.10.89**

(21) Anmeldenummer: **86901384.7**

(22) Anmeldetag: **15.02.86**

(86) Internationale Anmeldenummer:
**PCT/EP 86/00077**

(87) Internationale Veröffentlichungsnummer:
**WO/8605336 (12.09.86 Gazette 86/20)**

(51) Int. Cl.⁴: $H\ 02\ P\ \ 6/02$

(54) SCHALTUNG ZUR STEUERUNG EINES BÜRSTENLOSEN ELEKTROMOTORS.

(30) Priorität: **06.03.85 DE 3507883**

(43) Veröffentlichungstag der Anmeldung:
**01.04.87 Patentblatt 87/14**

(45) Bekanntmachung des Hinweises auf die Patenterteilung: **11.10.89 Patentblatt 89/41**

(84) Benannte Vertragsstaaten:
**AT BE CH DE FR GB IT LI LU NL SE**

(56) Entgegenhaltungen:
DE--A-- 1 538 893
DE--A-- 1 538 916

(73) Patentinhaber: **Deutsche Thomson-Brandt GmbH**
**Hermann-Schwer-Strasse 3 Postfach 1307**
**D-7730 Villingen-Schwenningen (DE)**

(72) Erfinder: **RILLY, Gerard**
**Panoramaweg 6**
**D-7731 Unterkirnach (DE)**

Jouve, 18, rue St-Denis, 75001 Paris, France

## Beschreibung

Die Erfindung betrifft eine Schaltung zur Steuerung eines bürstenlosen Elektromotors, insbesondere eines langsam laufenden Flachmotors, der z. B. für den Direktantrieb von Waschmaschinen geeignet ist. Bei einem Direktantrieb der Waschtrommel einer Waschmaschine muß die Drehgeschwindigkeit in weiten Grenzen, nämlich 40-70 Upm für den Waschvorgang und etwa 1 000 Upm für den Schleudervorgang geändert werden. Mit Synchronmotoren ist dieses ohneweiteres nicht möglich, weil die Drehzahl eines Synchronmotors von der nicht beinflußbaren Netzfrequenz abhängig ist.

Es ist bekannt (DE-OS 15 38 916, 15 38 893), die Statorwicklungen des mit einem permanentmagnetischen Rotor versehenen Motors über elektronisch steuerbare Schalter an das Netz anzuschließen und an die Steuerelektroden der Schalter eine Phasenanschnittsteuerung bewirkende aus der Rotorstellung abgeleitete Steuerspannungen anzulegen. Die Steuerspannungen werden dabei durch vom Rotor gesteuerte Hallgeneratoren gewonnen.

Der Erfindung liegt die Aufgabe zugrunde, eine Schaltung zur Steuerung eines bürstenlosen Elektromotors zu schaffen, die unabhängig von der Netzfrequenz einen Langsamlauf des Motors ermöglicht. Durch eine Weiterbildung der Erfindung wird zusätzlich die Aufgabe gelöst, däß trotz einer unsymmetrischen Speisung der Statorwicklung eine symmetrische Belastung des Netzes eingehalten wird.

Diese Aufgaben werden durch die im Anspruch 1 bzw. Anspruch 2 beschriebene Erfindung gelöst. Vorteilhafte Weiterbildungen der Erfindung sind in den Unteransprüchen beschrieben.

Der Betrieb eines Motors mit der erfindungsgemäßen Steuerschaltung hat mehrere Vorteile. Durch die in weiten Grenzen beeinflußbare Drehzahl des Motors kann dieser z. B. in einer Waschmaschine zum Direktantrieb der Trommel sowohl bei dem langsamen Waschvorgang als auch bei dem schnellen Schleudervorgang verwendet werden. Durch die Steuerung der den Statorwicklungen zugeführten Ströme und den bürstenlosen Rotor sind keine Kollektoren notwendig, wodurch die Zuverlässigkeit erhöht wird. Eine Umschaltung der Drehrichtung, die insbesondere bei Waschmaschinen wichtig ist, kann rein elektronisch durch die Steuerung der Statorwicklung erreicht werden, so daß kein Lestungsrelais erforderlich ist. Durch eine elektronische Steuerung kann außerdem eine elektrische Bremsung erreicht werden. Zu diesem Zweck wird z. B. durch Umpolung der zugeführten Spannungen ein Drehmoment erzeugt, das der gerade vorliegenden Drehrichtung entgegengesetzt gerichtet ist. Die Phasenschnittsteuerung erlaubt außerdem eine Änderung des Drehmomentes, weil durch ein Änderung des Phasenanschnittwinkels die dem Motor zugeführte elektrische Energie und damit das erzeugte Drehmoment beeinflußt werden können.

Die Anwendung der Steuerschaltung gemäß Anspruch 1 und die Aufteilung der Statorwicklung gemäß Anspruch 2 erfolgen vorzugsweise bei jeder vorhandenen Statorwicklung. Es ist aber auch möglich, diese Anwendung auf nur eine Statorwicklung zu beschränken. Das ist insbesondere möglich bei einer hohen Geschwindigkeit, bei der die Frequenz des magnetischen Feldes und die Netzfrequenz etwa gleich sind. Dann kann der Motor ähnlich wie ein Synchronmotor laufen, bei dem das erzeugte Drehmoment durch Änderung des Phasenanschnittwinkels einstellbar ist. Die Netzspannung kann unmittelbar die einem Netz entnommene Spannung sein. Sie kann aber auch mit einem Spannungswandler (Wechselrichter) aus einer Gleichspannung, z. B. einem Akku, abgeleitet werden, wenn die Motorleistung kleiner ist und eine Speisung mit einem Akku ermöglicht. Das von Motor erzeugte Drehmoment ist in der Regel nicht konstant, sondern ändert sich periodisch über den Drehwinkel des Motors. Dieses Drehmoment wird jedoch durch die Trägheit des Rotors und der von diesem angetriebenen Teile ausreichend integriert.

Die Erfindung wird in folgenden anhand der Zeichnung erläutert. Darin zeigen

Fig. 1 das Grundprinzip der erfindungsgemäßen Steuerung,

Fig. 2 Kurven zur Erläuterung der anordnung nach Fig. 1,

Fig. 3 ein praktisches Ausführungsbeispiel der Erfindung,

Fig. 4 Kurven zur Erläuterung der Wirkungsweise der Anordnung nach Fig. 3,

Fig. 5 ein Ausführungsbeispiel für die Weiterbildung der Erfindung gemäß Anspruch 2 und

Fig. 6 Kurven zur Erläuterung der Wirkungsweise der Anordnung nach Fig. 5.

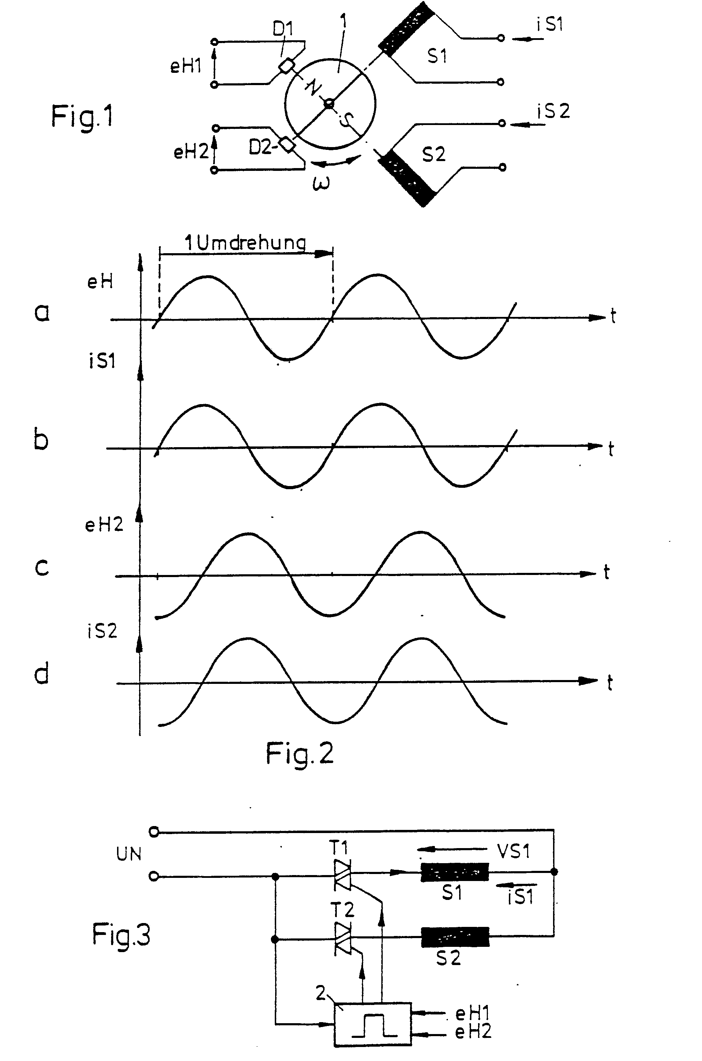

Fig. 1 zeigt von einem Antriebsmotor den Rotor 1, zwei Statorwicklungen S1, S2 und zwei Hall-Elemente D1, D2. Der Rotor 1 hat diametral gegenüber liegend einen Nordpol N sowie einen Südpol S, die durch Permanentmagnete gebildet sind. Die Hall-Elemente D1 und D2 erzeugen Spannungen eH1 und eH2, die die jeweiligen Winkelstellung des Rotors 1 anzeigen. Die Spannungen eH1 und eH2 steuern die den Wicklungen S1, S2 zugeführten Ströme iS1, iS2 derart, daß die Wicklungen S1, S2 abwechselnd Nordpole und Südpole erzeugen. Diese wirken mit den Polen des Stators 1 zusammen und verursachen die Rotation des Rotors 1 in der gewünschten Richtung.

Fig. 2 zeigt den Verlauf der in Fig. 1 dargestellten Spannungen und Ströme. Die Ströme iS1 und iS2 sind gegeneinander um 90° in der Phase verschoben entsprechend der Lage der Wicklungen S1, S2. Die durch die Wicklungen S1, S2 erzeugten Nord- und Südpole bilden also das für die Rotation des Rotors 1 erforderliche Drehfeld. Wenn die Ströme iS1, iS2 unmittelbar aus der Netzfrequenz abgeleitet werden, ist die Drehzahl des Motors durch die Netzfrequenz vorgegeben und könnte nur durch eine Änderung der Polzahl, also der benötigten Statorwicklungen, in Stufen geändert werden.

Fig. 3 zeigt eine Ausbildung, bei der die Drehzahl nicht durch die Frequenz der angelegten Netzspannung UN festgelegt ist. Die Netzspannung UN ist über zwei Triacs T1, T2 an die beiden Wicklungen S1, S2 angelegt. Triacs bilden Schalter, die einen Wechselstrom in beiden Richtungen leiten und an einer Steuerelektrode, dem sogenannten Gate, beliebig ein- und ausschaltbar sind. Die Triacs T1, T2 werden von der Steuerschaltung 2 gesteuert. An die Steuerschaltung 2 sind einerseits die Netzspannung UN und andererseits die beiden Spannungen eH1 eH2 von den Hall-Elementen D1, D2 angelegt.

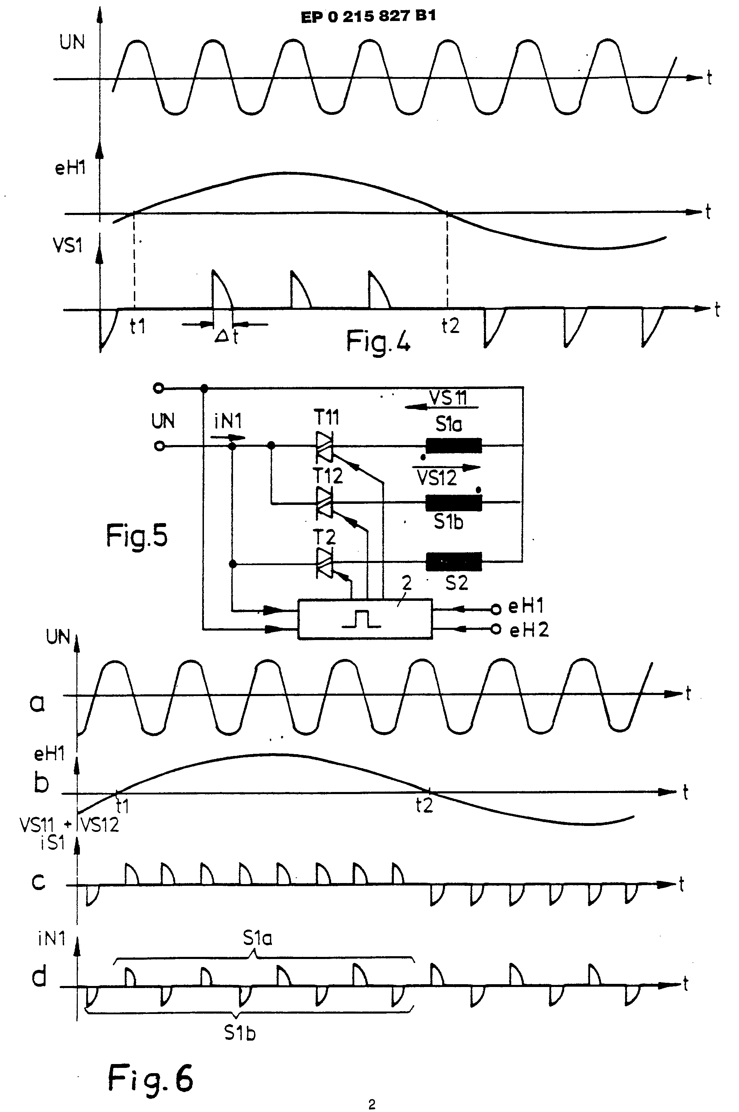

Fig. 4 zeigt, daß die Frequenz der Spannung eH1 wesentlich geringer ist als die Frequenz der Netzspannung UN. Aus den Spannungen eH1 und UN wird eine Steuerspannung für den Triac T1 erzeugt, die diesen jeweils nur während der Zeiträume Δt kurzzeitig im Sinne einer Phasenanschnittsteuerung leitend steuert. Die Zeiträume Δt beginnen jeweils beim Maximum der positiven Halbwelle der Netzspannung UN. Die Wicklung S1 bekommt also Spannungsimpulse VS1 gleicher Polarität, die im wesentlichen proportionale Stromipulse iS1 in der Wicklung S1 erzeugen. Diese Stromipulse gleichbleibender Polarität erzeugen z. B. einen Nordpol. Dieser Vorgang erstreckt sich von t1 bis t2. Es ist ersichtlich, daß die Frequenz der Spannung eH1 und damit die Dauer t1 bis t2, nicht durch die Netzfrequenz vorgegeben ist, sondern unabhängig von der Netzfrequenz gewählt werden kann. Die Zeit t1 bis t2 kann also beliebig groß gegenüber der Netzperiode sein, so daß eine von der Netzfrequenz unabhängige, niedrige Drehzahl erreicht wird.

Beginnend vom Zeitraum t2 erzeugt die Spannung eH1 durch ihre negative Halbwelle für den Triac T1 Zündimpulse mit einer anderen Phasenlage, so daß jetzt aus den negativen Halbwellen der Netzspannung UN Spannungsimpulse VS1 und damit entsprechende Stromimpulse iS1 erzeugt werden. Dadurch wird der von der Wicklung S1 erzeugte Magnetpol umgepolt. Jeweils die Gruppe von Spannungs- und Stromimpulsen während der Zeit t1 bis t2 entspricht also einer Halbwelle der Kurve iS1 in Fig. 2.

Wie Fig. 4 zeigt, werden während eines längeren Zeitraumes, dort t1 bis t2, nur die positiven Halbwellen der Netzspannung UN ausgewertet. Das bedeutet eine unsymmetrische, anomale Belastung des Netzes, die den Wirkungsgrad des Motors vermindert, gegen Vorschriften verstoßen und zu Störungen führen kann.

Bei der Weiterbildung gemäß Fig. 5 wird dieser Nachteil der unsymmetrischen Belastung des Netzes vermieden. Durch entsprechende Steuerung der Triacs T11, T12 werden dem Netz Stromimpulse iN1 gemäß Fig. 6d entnommen. Das bedeutet, daß die positiven und negativen Halbwellen der Netzspannung UN gleichmäßig ausgewertet werden und somit eine symmetrische Belastung des Netzes vorliegt. Die Wicklung S1 ist in zwei Teilwicklungen S1a und S1b aufgeteilt, die einander gleich und magnetisch entgegengesetzt gepolt sind, wie durch die Punkte angedeutet. Durch entsprechende Steuerung der Triacs T11, T12 werden die positiven Stromimpulse iN1 der Teilwicklung S1a und die negativen Stromimpulse iN1 der Teilwicklung S1b zugeführt. Da die Wicklungen gegengesetzt gepolt sind, ergibt sich für die Summe der Spannung VS11 und VS12 und damit auch für den Strom iS1 für die Gesamtwicklung S1 = S1a + S1b die Kurvenform gemäß Fig. 6c. Wie in Fig. 4 wird also die aus S1a und S1b bestehende Wicklung S1 in der Auswirkung auf das magnetische Feld jeweils während der Halbdauer der Spannung eH1 mit Stromimpulsen gleicher Polarität gespeist. Der Triac T11 ist durch die angelegte Steuerspannung jeweils nur während der positiven Stromimpulse entsprechend dem Stromflußwinkel der Phasenanschnittsteuerung durchlässig gesteuert und der Triac T12 nur während der Dauer der negativen Stromimpulse iN1. Während also das Netz in erwünschter Weise durch den Strom iN1 eine symmetrische Belastung gemäß Fig. 6d erfährt, wird die Gesamtwicklung S1 von t1 bis t2 mit unsymmetrischen Stromimpulsen gleichbleibender Polarität gemäß Fig. 6c gespeist, so daß ein bestimmter Magnetpol, N oder S, erzeugt wird. In dem auf den Zeitpunkt t2 folgenden Zeitram erfolgt wie in Fig. 4 eine Umpolung, so daß nun die negativen Stromimpulse iN1 auf die Wicklung S1a und die positiven Stromimpulse iN1 auf die Teilwicklung S1b gelangen, damit im Zeitpunkt t2 der notwendige Polwechsel des durch die Wicklung S1 erzeugten Magnetpols auftritt. Auf gleiche Weise kann mit der Wicklung S2 verfahren werden. Es ist aber auch möglich, nur eine Statorwicklung in der beschriebenen Weise zu speisen.

## Patentansprüche

1. Schaltung zur Steuerung eines bürstenlosen Elektromotors mit permanentmagnetischem Rotor (1) am Einphasennetz, insbesondere eines Langsamläufers für eine Waschmaschine, bei der die Statorwicklungen (S1, S2) über elektronisch steuerbare Schalter (T1, T2) an das Netz (UN) angeschlossen und an die Steuerelektroden der Schalter (T1, T2) eine Phasenanschnittsteuerung bewirkende aus der Rotorstellung abgeleitete Steuerspannungen (eH1, eH2) angelegt sind, dadurch gekennzeichnet, daß die Polarität der einer Statorwicklung (S1, S2) zugeführten Spannung jeweils nach einer Vielzahl von Netzperioden gewechselt wird.

2. Schaltung nach Anspruch 1, dadurch gekennzeichnet, daß die Wicklung (S1) in zwei entgegengesetzt gepolte Teilwicklungen (S1a, S1b) aufgeteilt ist und aus der Netzspannung gewonnene Impulse (iN1) abwechselnder Polarität mit der einen Polarität (+) der ersten Teilwicklung (S1a) und mit der anderen Polarität (—) der zweiten Teilwicklung (S1b) zugeführt werden.

3. Schaltung nach Anspruch 2, dadurch gekennzeichnet, daß die beiden Teilwicklungen (S1a, S1b) gleich sind.

4. Schaltung nach Anspruch 2, dadurch gekennzeichnet, daß die Steuerschaltung einen Triac (T11, T12) enthält.

5. Schaltung nach Anspruch 2 und 4, dadurch gekennzeichnet, daß in den Wegen zu den beiden Teilspulen (S1a, S1b) je ein Triac (T11, T12) liegt.

6. Schaltung nach Anspruch 1, dadurch gekennzeichnet, daß jeweils eine Statorwicklung (S1) in zwei magnetisch entgegengesetzt gepolte Teilwicklungen (S1a, S1b) aufgeteilt ist.

## Claims

1. Control circuit for a brushless electric motor with permanent rotor (1) on the single-phase mains supply, in particular a low-speed motor for a washing machine, in which the stator windings (S1, S2) are connected to the mains (UN) by electronically controlled switches (T1, T2) and control voltages (eH1, eH2) derived from the rotor position and producing a phase gating control are applied to the control electrodes of the switches (T1, T2), characterised in that the polarity of the voltage fed to one stator winding (S1, S2) is changed in each case after a plurality of mains periods.

2. Circuit according to claim 1, characterised in that the winding (S1) is divided into two part windings (S1a, S1b) of opposite polarity and pulses (iN1) of alternating polarity derived from the mains voltage and are supplied with one polarity (+) to the first part winding (S1a) and with the other polarity (—) to the second part winding (S1b).

3. Circuit according to claim 2, characterised in that the two part windings (S1a, S1b) are identical.

4. Circuit according to claim 2, characterised in that the control circuit contains a triac (T11, T12).

5. Circuit according to claims 2 and 4, characterised in that (T11, T12) lies in the paths to each of the two part coils (S1a, S1b).

6. Circuit according to claim 1, characterised in that one stator winding (S1) is divided respectively into two part windings (S1a, S1b) of magnetically opposite polarity.

## Revendications

1. Circuit pour commander un moteur électrique sans balais et comportant un rotor (1) à aimants permanents, raccordé à un réseau monophasé, notamment pour commander un rotor longitudinal d'une machine à laver le linge, et dans lequel les enroulements statoriques (S1, S2) sont raccordés au réseau (UN) par l'intermédiaire d'interrupteurs (T1, T2) pouvant être commandés électroniquement et dans lequel des tensions de commande (eH1, eH2) réalisant une commande de découpage de phase et dérivées de la position du rotor sont appliquées aux électrodes de commande des interrupteurs (T1, T2), caractérisé en ce que la polarité de la tension envoyée à un enroulement statorique (S1, S2) est modifiée respectivement au bout d'une multiplicité de périodes du réseau.

2. Circuit selon la revendication 1, caractérisé en ce que l'enroulement (S) est subdivisé en deux enroulements partiels (S1a, S1b) polarisés en des sens opposés et que des impulsions (iN1) obtenues à partir de la tension du réseau et possédant des polarités alternées sont envoyées aux enroulements partiels, à savoir que de telle impulsions possédant une polarité (+) sont envoyées au premier enroulement partiel (S1a) et que de telles impulsions possédant l'autre polarité (—) sont envoyées au second enroulement partiel (S1b).

3. Circuit selon la revendication 2, caractérisé en ce que les deux enroulements partiels (S1a, S1b) sont identiques.

4. Circuit selon la revendication 2, caractérisé en ce que le circuit de commande contient un triac (T11, T12).

5. Circuit selon les revendications 2 à 4, caractérisé en ce qu'un triac respectif (T11, T12) est situé dans les trajets aboutissant aux deux enroulements partiels (S1a, S1b).

6. Circuit selon la revendication 1, caractérisé en ce qu'un enroulement statorique respectif (S1) est subdivisé en deux enroulements partiels (S1a, S1b) polarisés magnétiquement en des sens opposés.

Fig.1

Fig.2

Fig.3

Fig.4

Fig.5

Fig.6